# EUROPEAN PATENT SPECIFICATION

(11) **EP 0 515 470 B1**
(45) Date of publication and mention of the grant of the patent: **21.12.1994**
(21) Application number: 91904124.4
(22) Date of filing: 05.02.1991
(51) Int. Cl.: B60P 1/64

(54) **BUILDING-UP COMPLEMENTARY SYSTEMS FOR TRUCKS**
ZUSÄTZLICHE AUFBAUSYSTEME FÜR LASTFAHRZEUGE
SYSTEMES COMPLEMENTAIRES EN FORME DE STRUCTURES RAPPORTEES POUR CAMIONS

(30) Priority: 13.02.1990 SE 9000519
(43) Date of publication of application: 02.12.1992
(73) Proprietor: Laxo Mekan Aktiebolag, S-702 21 Örebro (SE)
(72) Inventor: PERSSON, Ake R., S-702 21 Örebro (SE)
(74) Representative: Avellan-Hultman, Olle
(86) International application number: SE9100080
(87) International publication number: WO9112153

(56) References cited:
- EP-A- 0 025 557
- AT-B- 374 749
- SE-B- 372 206
- SE-B- 392 429
- SE-B- 398 470
- US-A- 3 995 760

## Description

The present invention generally relates to complementary or building-up system or completing structure for trucks, in the following referred to as a "superstructure", and the invention is more particularly directed to a complementary system for trucks for making it possible to quickly and simply mounting of different types of superstructures or building-ups on a truck and for removing said superstructure therefrom respectively, or to quickly and simply replace a superstructure of one and the same truck, and comprising several lock guides fixedly mounted in predetermined positions in relation to the truck chassis and arranged to receive consoles or similar means on the superstructure for co-operation therewith, and means for lockingly connecting said consoles of the superstructure to said guides of the truck.

In earlier arrangements the superstructure generally used to be fixed mounted on the truck chassis, in the sense that the turntable, the load changer frame, the tank or reservoir, the concrete mixer etc. was bolted and welded to form a stationary or integral part of the truck chassis.

It is, however, advantageous to be able to use the truck for different purposes depending on the actual need of the day and, and for this purpose to be able to replace the superstructure of the truck by another type of superstructure. To meet this requirement a complementary system or superstructure system is known, in which the chassis of the truck is formed with several coupling means or quick- locks provided on exactly predetermined places of the chassis and on very accurately determined distances from each other and from the upper surface of the chassis frame. Correspondingly the superstructure or complementary structure is formed with an assisting support frame having matching connection means, for instance lock consoles, for lockingly engage the quick-locks of the truck chassis. The superstructures may be of different types, for instance a turntable for a semi-trailer, a load changing system, a so colled lift-dumper system, a tank or reservoir, a concrete mixer etc. By forming the chassis with an discharge means for the superstructure including a receiver means for support legs it is possible to relatively quick and simple remove the superstructure from the truck by:
- releasing the quick-locks, whereby the superstructure becomes released from the truck chassis,
- activating the unloading means of the chassis, so that the superstructure is lifted a some distance from the truck chassis,
- introducing support legs in the receiver means of the superstructure,
- lowering the superstructure with the support legs so as to stand on the ground,
- driving off the truck, whereby the superstructure is left standing on the ground resting on the support legs.

If the truck is to be provided with another superstructure the truck is moved backwards into position under such other superstructure which is standing on similar support legs on another place, and the superstructure is mounted oppositely to what is described above, that is by expelling the discharge cylinders of the chassis to engage the guiding consoles of the support frame of the super- structure and to raise the superstructure with the support legs, removing the support legs, lowering the discharge cylinders, whereby the lock consoles of the superstructure engages the stationary quick- locks of the chassis, and engaging the quick-locks so that the superstructure becomes safely secured on the truck chassis.

As usual electrical and hydraulical couplings have to be connected, but this is no part of the invention and are not to be described in detail.

Normally a truck is delivered from the manufacturer without any built-up structure or superstructure at all, and for supplying the truck with such a superstructure the truck has to be moved to a superstructure manufacturer who mounts the quick-locks, the electical and hydraulical couplings, the oil tank for the hydraulic system etc.

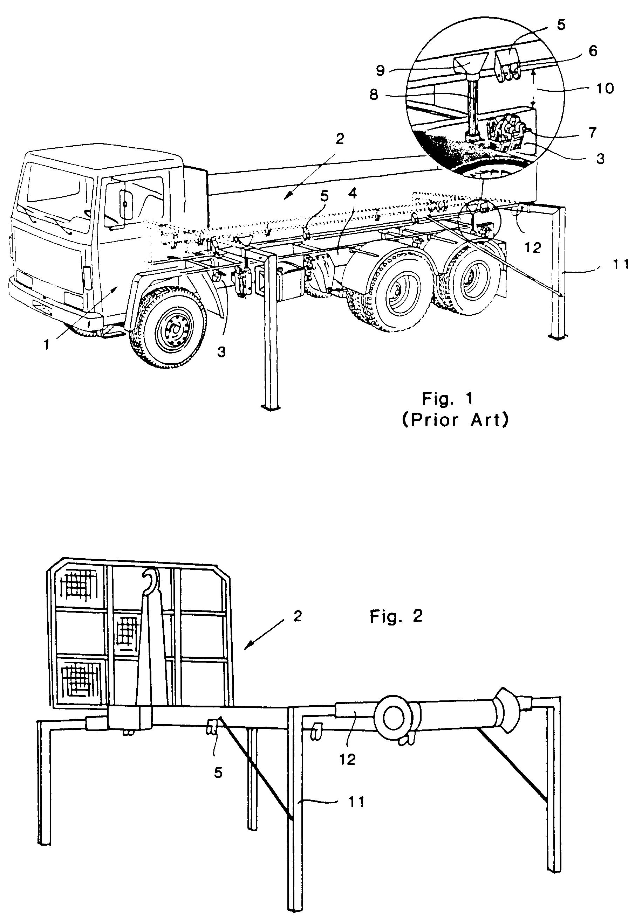

The above mentioned known system, which is shown in figure 1 of the drawings, is a well functioning system and gives the truck owner the possibility of quickly and simply replace one type of superstructure by another type, and thereby to enable an optimum utilization of the truck.

A system is known from SE-B-398.470 in which a lifting frame is mounted on the truck chassis, which lifting frame is capable of picking up a releasable truck platform which is standing on feet on the ground and to connect said platform to the the truck chassis, and vice versa.

A problem with said known system, however, is that the mounting of the superstructure system is relatively time consuming, and during the entire time of mounting said system the truck has to be standing inactive, and this leeds to rather great loss-of-use costs. The mounting of the quick-locks also needs great accuracy so that the quick-locks become located on exactly predetermined places corresponding to the location of the locking consoles of tie superstructure. For this purposes special mounting jigs are used, and the superstructure manufacturer must have several types of jigs in stock suited for different types and different sizes of trucks. It is often also necessary to specially design the electrical and hydraulical conduits and tubes, the location of the hydraulic oil tank and other parts of the system so that said parts do not collide with parts already existing in the truck. In front of all it is very important that the quick-locks become mounted on the chassis frame on exactly predetermined places from the truck drivers's cab and from the rear end of the truck respectively, on exactly predetermined distances from each other, and on exactly predetermined distances from the upper surface of the chassis frame so that the superstructure, upon locking of the quick-locks, becomes clamped to the upper surface of the chassis frame so as to avoid any possibility of play between the superstructure and the truck chassis.

The object of the invention therefore to solve the problem of providing a complementary system or superstructure system for trucks, which system is pre-manufactured with a great accuracy, which has pre-mounted electrical and hydraulic conduits, pipes and couplings, hydraulic tanks, guide cylinders for the superstructure etc., and which system is of standard type and can be mounted on nearly any type of truck chassis, and which - above all - can be mounted on the truck chassis much quicker than has so far been possible, whereby it is possible to reduce the inactive time of the truck while being supplied with the superstructure as far as to 10-15%, or even still less, of the previously needed inactive, deadlock time.

According to the invention the complementary system or superstructure system is formed as a pre-manufactured intermediate frame of relatively small height and comprising both quick-locks and discharge means, all necessary hydraulic and electric means etc., whereby all parts of the intermediate frame apparatus are mounted in exactly predetermined positions, and which intermediate frame can be mounted on an available truck chassis by being connected thereto for instance with the assistance of the quick-locks.

For quick-locking the superstructure in the known systems there used to be manually, or in some cases hydraulically, operable locking pins for the quick-locks, and for space reasons and for making it possible to manually operate the locking pins the acutation means for said locking pins used to be mounted facing outwards from the chassis frame. Sometimes such actuation means were mounted so as to prevent the mounting of other means, or so as to run the risk of being damaged depending on their exposed location.

It is now possible to mount also hydraulic cylinders for the locking pins of the quick-locks well protected and out of way for other means inside the intermediate frame. In a preferred embodiment of the invention said hydraulic actuation cylinders are double acting, floating hydraulic cylinders which at the same time actuate the quick-locking pins on both sides of the truck and both in locking and in releasing directions.

Now the invention is to be described more in detail with reference to the accompanying drawings, which discloses a preferred embodiment of the invention.

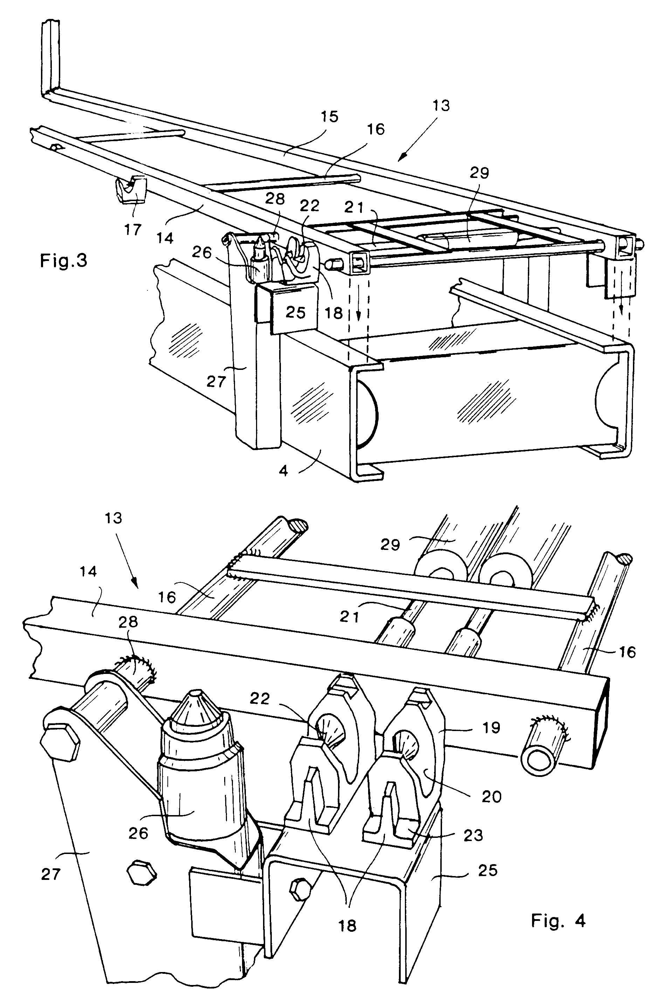

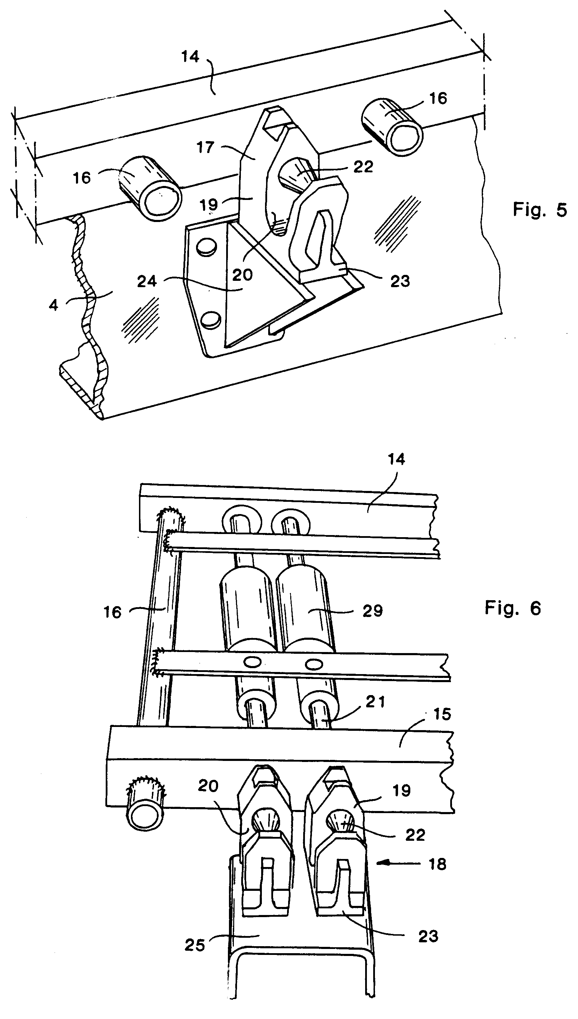

As mentioned above figure 1 shows a known complementary system or superstructure system, and the figure discloses a complementary wagon bridge which has been lifted from the truck chassis and has been supplied with support legs, but before the truck has been moved off, and figure 2 shows a similar superstructure standing on the ground and with the truck moved off said structure. Figure 3 is a fragmentary view from above and from behind of an intermediate frame for a superstructure according to the invention before said structure has been mounted on a truck chassis. Figure 4 shows a detail at the rear part of the apparatus of figure 3 in its mounted state, and figure 5 similarly shows a detail of an intermediate frame of the apparatus while mounting of said frame on a truck chassis. Figure 6 finally shows a preferred embodiment of an actuation means for the quick-locks in the apparatus according to the invention.

Figure 1 shows a truck 1 having a known type of superstructure system with an exchangable wagon bridge 2 or a similar structure. The superstructure system comprises several quick-locks, in the illustrated case four quick-locks 3, the rearmost quick-lock of which is a twin quick-lock. The quick-locks are mounted on the outer sides of the truck frame 4 in accurately predetermined positions in the longitudinal direction of the truck and with accurately predetermined distances from each other and from the upper surface of the frame. On the exchangable wagon bridge there are consoles 5 which, as known, are formed with a cross bar 6 adapted to slidingly engage a V-shaped groove of the quick-lock 3 and to become locked therein by means of a pin 7 having a conical outer end, and which is adapted to be screwed into said V-shaped groove thereby pressing the consoles 5 downwards with a slight play to the bottom of the V-groove to lock the wagon bridge 2 to the chassis frame 4 of the truck. For making it possible to lift the wagon bridge 2 from the chassis frame 4 in case of replacing the superstructure by another superstructure on the truck several lift cylinders 8 are mounted on the chassis frame 4. Said lift cylinders 8 are arranged to engage guide yokes 9 of the wagon bridge 2 when being expelled, so that the wagon bridge 2 can be lifted some distance 10 from the chassis frame 4. In this position support legs 11 can be mounted in carriers 12 of the wagon bridge, which support legs 11, when standing on the ground, keep the wagon bridge in the lifted position so that the truck can be moved off to collect another superstructure. As shown in figure 2 the wagon bridge 2 which has been lifted off the truck can be left standing on its support legs 11 until said wagon bridge is to be used the next time.

As mentioned above great and time consuming operations of the truck are needed both for mounting of the quick-locks in their very accurately predetermined positions on the truck frame 4 and for mounting of the different electric conduits, the hydraulic hoses or pipes, the hydraulic oil tank etc. on suitable and correct places on the truck chassis. For this purposes special jigs are needed which are often different from each other for different truck chassis. In many cases it is also necessary to take special measurements to create spaces on the truck chassis for different parts and accessories.

According to the invention most of the above mentioned problems, and also other problems, are solved by means of the apparatus shown in figures 3-6. The apparatus comprises a separate, intermediate frame 13 including all necessary means for locking the superstructure and for handling of the superstructures of the truck. The finally completed intermediate frame 13 is arranged to be fixed mounted on the truck chassis 4 and to thereafter receive different superstructures or building-ups which are being connected to eyelets of the intermediate or assisting frame 13. The intermediate frame 13 can made low, for instance with a height of only 4-8 cm, and this insignificant increase of height is quite acceptable.

The intermediate frame is made of two longitudinally extending square tubes 14 and 15 which are interconnected and are kept on a predetermined distance from each other by several cross cylindrical tubes 16. The transversal distance between the square tubes 14 and 15 is calculated considering the width between the outer edges of the actual truck. Both the hollow square tubes 14 and 15 and the cylindrical tubes 16 can be used for placing of the electrical conduits, the hydraulic hoses etc., so that said conduits and hoses are well protected. The cylindrical tubes 16, which preferably extend right through the longitudinal square tubes 14 and 15 and project a slight distance out from the sides thereof also can be used for connection of different parts of the apparatus. By having the cylindrical tubes 16 extend through the square tubes 14 and 15 a stiff interconnection of said suare tubes 14 and 15 is obtained, and it is also possible to easily vary the width between the square tubes 14 and 15 by simply displacing the square tubes on the transversal cylindrical tubes 16.

At the outer sides of the square tubes 14 and 15 quick-locks, for instance the quick-locks 17 and 18 of figure 3, are welded on exactly predetermined distances from each other. The complete manufacture of the intermediate frame 13 with the quick-locks and all other details is made in quantities in a factory using a standard jig for any and all types and sizes of trucks and superstructures.

As best evident from figure 5 the quick-locks 17 and 18 comprises a clamp 19 forming a substantially V-shaped groove 20 having a rounded bottom. A cross bar of a console (see 6 of figure 1) in a superstructure is adapted to be guided into and to be received in said V-groove 20 and to be locked by means of a locking rod 21 having a conical end 22 which presses the cross bar of the super structure downwards in the locking groove 20. The quick-lock is formed with a bottom plate 23 by means of which the quick-locks, and thereby the entire intermediate frame, can be mounted on the chassis frame 4 of the vehicle. The mounting can be made in that a console 24 is simply welded to the side surface of the chassis frame, whereupon the bottom plate 23 of the quick-lock is welded to the upper surface of the console 24. For this purpose the quick-locks preferably are formed so as to project a slight distance down from the frame tubes 14, 15. For providing a guarantee that there is a play free connection between the intermediate frame 13 and the chassis frame 4 it is preferably foreseen that there is a play of a couple of millimeters between the console 24 and the quick-locks 17, 18, and that the two parts are welded together while the intermediate frame 14 is strongly pressed to the chassis frame 4.

The rear end of the intermediate frame 13 is formed with two quick-locks 18 (a twin quick-lock), which are (is) mounted on a common support console 25, which, in connection to the mounting of the intermediate frame on the truck chassis, is bolt connected directly to the chassis frame, whereupon the quick-lock or quick-locks are welded to said support console 25.

At or adjacent both the front end and the rear end of the intermediate frame there is a lift cylinder 26 on each side of the intermediate frame. Said lift cylinders 26 are arranged to co-operate with a guide yoke (see 9 of figure 1) of the superstructure as explained in connection to figure 1. The lift cylinders 26 are used **both** for lifting the superstructure when removing the intermediate frame and depositing said frame on support legs, **and** for lowering and guiding a new superstructure into a locking position with the locking console of the superstructure located in the quick-locks 17 and 18. As shown in figures 3 and 4 the lift cylinders are enclosed in a carrier 27 which is connected both to the support console 25 and to a cross tube end 28 which is also a transversal interconnecting element of the intermediate frame 13.

A quick-lock on the left side and a quick-lock on the right side of the intermediate frame 13 provides a pair of locks co-operating with locking rods 21. For the actuation of the locking rods 21 of such pairs of quick-locks 17, 18 the ends of the locking rods 21 facing each other are formed as (not illustrated) hydraulic pistons, which preferable are enclosed in a common hydraulic cylinder 29. The said hydraulic cylinder 29 may be of "floating" type and has a hydraulic connection at the longitudinal centre thereof for providing an expelling of the two co-operating locking rods 21 in opposite directions for connecting a superstructure to the intermediate frame. The cylinder 29 also has a hydraulic connection at the ends thereof for withdrawing the locking rods from the quick-locks thereby releasing the superstructure.

For the sake of clearness all electrical and hydraulical (or penumatical) conduits and hoses and all means for the actuation of the quick-locks and the lift cylinders have been omitted in the drawings. It should, however, be noted that all such means are enclosed in the pre-manufactured intermediate frame, so that said frame very quickly and simply can be mounted on an available truck.

After the intermediate frame has been manufactured in a factory it can be kept in stock at the place of manufacture, or it can be sent and be mounted on the truck on any other place. The mounting is made very simply in that the intermediate frame 13 is placed on top of the chassis frame 4 of the truck; consoles 24 are bolted and support consoles 25 are welded to the sides of the chassis frame 4; the quick-locks 17 and 18 are welded to the consoles 24 and to the quick-lock support consoles 25 at the rear end of the intermediate frame 13; the electrical and hydraulical input connections are coupled to standard outputs for electricity and hydraulic oil of the vehicle, and thereby the entire mounting of the apparatus is finished.

When collecting a superstructure the truck is moved to a position under a superstructure which is standing on support legs, for instance a structure of the type illustrated in figure 2. The lift cylinders 26 are being expelled so that the conical ends thereof slidingly engage the guide yokes 9 of said structure, and the structure is lifted a slight distance upwards, the support legs 11 are removed and the lift cylinders 26 are lowered until the cross locking bars 6 are slidingly guided into the V-grooves 20 of the quick-locks 17 and 18; finally the quick-lock cylinders 29 are actuated, whereby the locking rods 21 are being expelled sideways so that the conical ends 22 thereof engage and lock the cross bars 6 of the superstructure in the V-grooves 20 of the quick-locks 17, 18. Thereby the superstructure is safely locked on the truck and is ready for being used.

A releasing of the superstructure is made in the oppsotie way.

### Reference numerals

### Figures 1-2

- 1: truck
- 2: wagon bridge
- 3: quick-locks
- 4: chassis frame
- 5: console (of 2)
- 6: cross bar (of 5)
- 7: pin
- 8: lift cylinder
- 9: guide yoke
- 10: (lift height)
- 11: support legs
- 12: carrier (for 11)

### Figures 3-6

- 13: intermediate frame
- 14: square tube, longitudinal
- 15: square tube, longitudinal
- 16: cylindrical tube, transversal
- 17: quick-lock
- 18: quick-lock
- 19: clamp
- 20: V-groove (of 19)
- 21: locking rod
- 22: conical end (of 21)
- 23: bottom plate (of 17)
- 24: console
- 25: support console
- 26: lift cylinder
- 27: carrier (for 26)
- 28: cross tube
- 29: quick-lock cylinder

## Claims

1. Complementary system for trucks for making it possible to quickly and simply mounting of different types of superstructures or building-ups on a truck and for removing said superstructure therefrom respectively, or to quickly and simply replace a superstructure of one and the same truck, and comprising several lock guides (17, 18) fixedly mounted in predetermined positions in relation to the truck chassis (4) and arranged to receive consoles (5, 6) or similar means on the superstructure for co-operation therewith, and means (21, 29) for lockingly connecting said consoles (5, 6) of the superstructure to said guides (17, 18) of the truck, **characterized** in that the complementary system for the superstructure comprises
- an intermediate frame (13) which is pre-manufactured, as a separate unit, and which is arranged, after having been finally completed, to be fixedly mounted on the truck chassis (4) for receiving said different types of superstructures,
- lock guides (17, 18) for the superstructure mounted on said pre-manufactured intermediate frame (13),
- all necessary electric and hydraulic means (21, 22, 29) both for locking of a superstructure on the truck and for releasing of said superstructure therefrom, which means are mounted on said pre-manufactured intermediate frame (13), and
- means for handling of the superstructures on the truck including means (26), mounted on the intermediate frame (13), for lifting of the super structure from the intermediate frame (13), lowering of the superstructure thereonto and guiding of said superstructure into engagement with the intermediate frame (13).

2. System according to claim 1, **characterized** in that the intermediate frame (13) is connected to the truck chassis in that downwardly projecting parts of the lock guides (17, 18) are weld connected to consoles (24) which are bolted to the chassis frame (4).

3. System according to claim 1 or 2, **characterized** in that the lock guides (17, 18) are formed
- with longitudinally extending V-shaped grooves (20) arranged to guidingly receive cross bars (6) of the consoles (5, 6) on the superstructure,
- and with means for receiving transversally extending locking rods (21) included in said locking and releasing means (21, 22, 29) and having conical ends (22) arranged to lockingly engage the V-grooves (20) of the lock consoles (17, 18) thereby securing said cross bars (6) of the superstructure in the lock guides (17, 18).

4. System according to claim 3, **characterized** in that the apparatus comprises pairs of oppositely operating locking locking rods (21) which are transversally mounted between co-operating longitudinally extending tubes (14,15) of the intermediate frame (13), and a means (19) for concurrently expelling and or withdrawing the locking rods (21) of each said pairs of locking rods (21) at the same time but in opposite directions.

5. System according to claim 4, **characterized** in that the ends of the locking rods (21) facing each other are hosed is an actuation cylinder (29) which is of the double acting and of the floating type and is arranged to provide an expelling and a withdrawal of the two cooperating locking rods (21) concurrently with each other.

6. System according to claim 4 or 5, **characterized** in that the longitudinally extending tubes of the intermediate frame (13) are hollow square tubes (14, 15), and in that the transversally extending tubes are round tubes (16) extending transversally right through the longitudinal square tubes (14, 15) and some distance outside said tubes, and in that lift cylinders (26) for the lifting and otherwise handling of the superstructure and other additional parts of the system are mounted in said protruding parts (28) of the transversal round tubes (16).

7. System according to claim 6, **characterized** in that all electrical conduits and hydraulic hoses etc. for the handling of the locking means (17, 18) and of the lift cylinders (26) etc. are placed inside or in direct connection to the longitudinal and transversal tubes (14-16) of the intermediate frame (13).

## Patentansprüche

1. Zusatzsystem für Lastwagen zum schnellen und einfachen Montieren unterschiedlicher Aufbauten oder Aufsätze auf einem Lastwagen und zum Abnehmen des jeweiligen Aufbaus von letzterem oder zum schnellen und einfachen Auswechseln eines Aufbaus ein und desselben Lastwagens, mit mehreren Riegelführungen (17, 18), die in vorbestimmten Positionen bezüglich des Lastwagenchassis (4) fest montiert und so angeordnet sind, das sie am Aufbau sitzende Konsolen (5, 6) oder dergleichen zum Zusammenwirken mit diesen aufnehmen, und mit Mitteln (21, 29) zum verriegelnden Verbinden der Konsolen (5, 6) des Aufbaus mit den Führungen (17, 18) des Lastwagens,
**dadurch gekennzeichnet**,
daß das Ergänzungssystem für den Aufbau folgende Merkmale umfaßt:
- einen als gesonderte Einheit vorgefertigten Zwischenrahmen (13), der nach vollständiger Fertigstellung so ausgebildet ist, daß er fest auf dem Lastwagenchassis (4) montiert wird, um die unterschiedlichen Aufbauten aufzunehmen,
- an dem vorgefertigten Zwischenrahmen (13) angeordnete Riegelführungen (17, 18) für den Aufbau,
- sämtliche erforderlichen elektrischen und hydraulichen Mittel (21, 22, 29) sowohl zum Verriegeln eines Aufbaus auf dem Lastwagen als auch zum Freigeben des Aufbaus von letzterem, wobei diese Mittel an dem vorgefertigten Zwischenrahmen (13) angeordnet sind, und
- Mittel zum Handhaben der Aufbauten auf dem Lastwagen, einschließlich von am Zwischenrahmen (13) angeordneten Mitteln (26) zum Anheben des Aufbaus vom Zwischenrahmen (13), zum Absenken des Aufbaus auf letzteren und zum Führen des Aufbaus in Eingriff mit dem Zwischenrahmen (13).

2. System nach Anspruch 1, dadurch gekennzeichnet, daß der Zwischenrahmen (13) dadurch mit dem Lastwagenchassis verbunden ist, daß nach unten vorspringende Teile der Riegelführungen (17, 18) mit Konsolen (24) verschweißt sind, die mit dem Chassisrahmen (4) verschraubt sind.

3. System nach Anspruch 1 oder 2, dadurch gekennzeichnet, daß die Riegelführungen (17, 18) folgende Merkmale aufweisen:
- längslaufende V-förmige Nuten (20), die so angeordnet sind, daß sie Querstangen (6) der am Aufbau sitzenden Konsolen (5, 6) unter gleichzeitiger Führung aufnehmen,
- und Mittel zur Aufnahme querlaufender Riegelstangen (21), die zu den Riegel- und Freigabemitteln (21, 22, 29) gehören und konische Enden (22) aufweisen, welche so ausgebildet sind, daß sie verriegelnd in die V-Nuten (20) der Riegelführungen (17, 18) eingreifen, wodurch sie die Querstangen (6) des Aufbaus in den Riegelführungen (17, 18) sichern.

4. System nach Anspruch 3, dadurch gekennzeichnet, daß die Vorrichtung ein Paar von entgegengesetzt arbeitenden Riegelstangen (21), die quer zwischen zusammenwirkenden, längslaufenden Rohren (14, 15) des Zwischenrahmens (13) montiert sind, sowie eine Einrichtung (19) umfaßt, um die Riegelstangen (21) jedes Paars von Riegelstangen (21) gleichzeitig, jedoch in entgegengesetzten Richtungen auszuschieben oder zurückzuziehen.

5. System nach Anspruch 4, dadurch gekennzeichnet, daß die einander gegenüberliegenden Enden der Riegelstangen (21) in einem Betätigungszylinder (29) liegen, der doppelt wirkend und schwimmend arbeitet und der so ausgebildet ist, daß er die beiden zusammenwirkenden Riegelstangen (21) gleichzeitig ausschiebt und zurückzieht.

6. System nach Anspruch 4 oder 5, dadurch gekennzeichnet, daß die längslaufenden Rohre des Zwischenrahmens (13) hohle, rechteckige Rohre (14, 15) sind, und daß die querlaufenden Rohre runde Rohre (16) sind, die sich senkrecht quer durch die längslaufenden rechteckigen Rohre (14, 15) hindurch und ein Stück nach außen aus diesen Rohren herauserstrecken, und daß Hubzylinder (26) zum Anheben und anderweitigen Handhaben des Aufbaus und weiterer zusätzlicher Teile des Systems an den vorspringenden Teilen (28) der querlaufenden runden Rohre (16) befestigt sind.

7. System nach Anspruch 6, dadurch gekennzeichnet, daß sämtliche elektrischen Leitungen und hydraulischen Schläuche etc. zum Handhaben der Riegelmittel (17, 18) und der Hubzylinder (26) etc. innerhalb der längslaufenden und querlaufenden Rohre (14-16) des Zwischenrahmens (13) oder in direkter Verbindung mit diesen Rohren angeordnet sind.

## Revendications

1. Système complémentaire pour les camions permettant respectivement d'installer rapidement et simplement différents types de superstructures ou de montages sur un camion, et de déposer lesdites superstructures de ce camion, ou de remplacer rapidement et simplement une superstructure d'un seul et même camion ; il comprend plusieurs guides de verrouillage (17, 18) montés à demeure sur des positions prédéfinies par rapport au châssis du camion (4) et disposés de manière à recevoir des consoles (5, 6) ou des moyens similaires sur la superstructure qui coopèrent avec elle, et des moyens (21, 29) de raccordement et de verrouillage desdites consoles (5, 6) de la superstructure auxdits guides (17, 18) du camion, **caractérisé** en ce que le système complémentaire pour la superstructure comporte :
- un cadre intermédiaire (13) qui est préfabriqué, en tant qu'unité séparée, et qui est conçu - après son achèvement final - pour être installé et fixé sur le châssis du camion (4) afin d'accueillir lesdits différents types de superstructure ;
- des guides de verrouillage (17, 18) pour la superstructure installés sur ledit cadre intermédiaire préfabriqué (13) ;
- tous les moyens électriques et hydrauliques (21, 22, 29) requis, à la fois pour verrouiller une superstructure sur le camion et pour déverrouiller ladite superstructure de ce camion, moyens qui sont installés sur ledit cadre intermédiaire préfabriqué (13) ; et
- des moyens de manutention des superstructures sur le camion, y compris un moyen (26) - installé sur le cadre intermédiaire (13) - permettant de soulever la superstructure du cadre intermédiaire (13), de faire descendre la superstructure dessus, et de guider ladite superstructure pour la mettre en prise sur le cadre intermédiaire (13).

2. Système selon la revendication 1, **caractérisé** en ce que le cadre intermédiaire (13) est relié au châssis du camion de manière à ce que les éléments des guides de verrouillage (17, 18) qui font saillie vers le bas sont soudés sur les consoles (24) qui sont boulonnées sur le cadre du châssis (4).

3. Système selon la revendication 1 ou 2, **caractérisé** en ce que les guides de verrouillage (17, 18) sont réalisés :
- avec des rainures en forme de V (20) s'étendant dans le sens longitudinal, conçues pour guider et recevoir des barres transversales (6) des consoles (5, 6) sur la superstructure;
- et comportant un moyen de réception de tiges de verrouillage (21) posées dans le sens transversal, inclus dans lesdits moyens de verrouillage et de déverrouillage (21, 22, 29) et présentant des extrémités coniques (22), conçu pour pénétrer dans les rainures en V (20) des consoles de verrouillage (17, 18) et s'y verrouiller, en fixant ainsi lesdites barres transversales (6) de la superstructure dans les guides de verrouillage (17, 18).

4. Système selon la revendication 3, **caractérisé** en ce que l'appareil comprend des paires de tiges de verrouillage (21) agissant l'une en face de l'autre, qui sont installées transversalement entre les tubes (14, 15) coopérant longitudinalement du cadre intermédiaire (13), et un moyen (19) permettant à la fois d'extraire et de rétracter les tiges de verrouillage (21) de chacune desdites paires de tiges de verrouillage (21), et ce, en même temps, mais dans des directions opposées.

5. Système selon la revendication 4, **caractérisé** en ce que les extrémités des tiges de verrouillage (21) face à face sont insérées dans un vérin de commande (29) qui est du type "à double effet" et "flottant", et qui est conçu pour déclencher simultanément l'extraction et la rétractation des deux tiges de verrouillage (21) qui coopèrent l'une avec l'autre.

6. Système selon la revendication 4 ou 5, **caractérisé** en ce que les tubes posés dans le sens de la longueur du cadre intermédiaire (13) sont des tubes carrés creux (14, 15), et en ce que les tubes posés transversalement sont des tubes ronds (16) qui traversent complètement les côtés des tubes carrés longitudinaux (14, 15) et qui sortent desdits tubes sur une certaine distance, et en ce que les vérins de levage (26) conçus pour le levage et les autres manoeuvres de la superstructure et d'autres éléments supplémentaires du système sont installés dans lesdits éléments en saillie (28) des tubes ronds transversaux (16).

7. Système selon la revendication 6, **caractérisé** en ce que tous les câbles électriques et flexibles hydrauliques, etc., requis pour manoeuvrer les dispositifs de verrouillage (17, 18) et les vérins de levage (26), etc., sont logés à l'intérieur des tubes longitudinaux et transversaux (14 à 16) du cadre intermédiaire (13), ou en liaison directe avec eux.
